# EUROPÄISCHE PATENTSCHRIFT

(11) **EP 2 299 344 B1**
(45) Veröffentlichungstag und Bekanntmachung des Hinweises auf die Patenterteilung: **16.10.2013**
(21) Anmeldenummer: 10008816.0
(22) Anmeldetag: 24.08.2010
(51) Int. Cl.: G05B 19/423, B25J 13/02, G05B 19/409, B25J 13/06

(54) **Eingabevorrichtung und -verfahren für einen Manipulator**
Input device and method for a manipulator
Dispositif d' entrée et procédé pour un manipulateur

(30) Priorität: 17.09.2009 DE 102009041946
(43) Veröffentlichungstag der Anmeldung: 23.03.2011
(73) Patentinhaber: KUKA Roboter GmbH, 86165 Augsburg (DE)
(72) Erfinder: Schreiber, Günter, Dr., 86316 Friedberg (DE)
(74) Vertreter: Schlotter, Alexander Carolus Paul

(56) Entgegenhaltungen:
- WO-A1-96/01977
- DE-U1- 9 101 376
- US-A1- 2004 155 865

## Beschreibung

Die vorliegende Erfindung betrifft eine Eingabevorrichtung zur kombinierten Eingabe von Steuer- und Programmbefehlen für einen Manipulator, insbesondere für einen Roboter, nach dem Oberbegriff des Anspruchs 1, ein Verfahren zur Eingabe von Steuer- und Programmbefehlen mittels einer solchen Eingabevorrichtung sowie ein Manipulatorsystem mit einer solchen Eingabevorrichtung.

Zum Betrieb eines Manipulators ist zum einen die Eingabe von Steuerbefehlen erforderlich, um den Manipulator in gewünschte Posen zu bewegen. Andererseits ist es notwendig, bestimmte Programmbefehle einzugeben, etwa das Öffnen eines Greifers, das Aktivieren eines Werkzeugs oder den Beginn eines Klebeauftrags. So fährt oder führt beispielsweise beim Teachen ein Bediener einen Manipulator manuell durch Steuerbefehle in Soll-Posen, die dann abgespeichert werden. Zusätzlich gibt der Bediener Programmbefehle ein, die zum Beispiel Aktionen des Manipulators beim Abfahren der durch die Soll-Posen vorgegebenen Soll-Bahn oder die Generierung der Soll-Bahn aus den Soll-Posen definieren.

Beispielsweise aus der EP 0 304 306 B1 ist die Eingabe von Steuerbefehlen zur Bewegung des Manipulators mittels Joystick bekannt. Die WO 2006/121649 A schlägt vor, zur Eingabe von Steuerbefehlen für zusätzliche Achsen Berührungsfeldsensoren an dem Joystick vorzusehen. Zur Eingabe von Programmbefehlen muss eine separate Tastatur verwendet werden.

Zur kombinierten Eingabe von Steuer- und Programmbefehlen ist aus der DE 295 11 863 U1 ein Programmiergerät mit diversen Schaltern und einem an dem Programmiergerät befestigten Joystick bekannt. Nachteilig erfordert das komplexe Programmiergerät eine beidhändige Bedienung, was insbesondere bei gleichzeitiger Handhabung von Werkzeugen, Werkstücken oder dergleichen umständlich ist.

Aus der JP 9-201785 sowie betriebsinterner Praxis unter dem Namen "KUKA Guiding Device" ist eine Eingabevorrichtung nach dem Oberbegriff des Anspruch 1 mit einem Joystick zur Eingabe von Steuerbefehlen bekannt, an dessen Kopf ein einachsiger Schalter vorgesehen ist, durch dessen Betätigung entsprechend nur ein einziger Programmbefehl eingegeben werden kann.

Aufgabe der vorliegenden Erfindung ist es, die Eingabe von Steuer- und Programmbefehlen für einen Manipulator zu verbessern.

Diese Aufgabe wird durch eine Vorrichtung mit den Merkmalen des Anspruchs 1 bzw. ein Verfahren mit den Merkmalen des Anspruchs 12 gelöst. Anspruch 10 stellt ein Manipulatorsystem mit einer erfindungsgemäßen Eingabevorrichtung unter Schutz, die Unteransprüche betreffen vorteilhafte Weiterbildungen.

Eine erfindungsgemäße Eingabevorrichtung wird zur kombinierten Eingabe von Steuer- und Programmbefehlen für einen Manipulator, insbesondere einen Roboter verwendet. Dabei wird als *Steuerbefehl* eine Anweisung, beispielsweise ein Steuersignal, bezeichnet, welche eine Bewegung des Manipulators steuert oder definiert. Diese kann beispielsweise eine anzufahrende Soll-Pose des Manipulators im kartesischen Arbeitsraum oder in Gelenkkoordinaten des Manipulators oder auch Soll-Inkremente umfassen, um die ein manipulatorfestes Referenzsystem, insbesondere der Tool Center Point, oder Gelenke des Manipulators bewegt werden sollen.

Zur Eingabe von solchen Steuerbefehlen weist die Eingabevorrichtung einen Handsteuerhebel auf, der von einem Bediener manuell in mehreren Achsen gegenüber einer festen oder ihrerseits beweglichen Basis bewegbar ist. Als Bewegungsachse wird vorliegend eine Bewegungsrichtung und gegebenenfalls deren Gegenrichtung bezeichnet, in der eine Einrichtung hin- und herbewegbar ist. Der Handsteuerhebel kann insbesondere als Joystick, vorzugsweise als 2D-, 3D-, 6D-Joystick mit 2, 3 bzw. 6 Bewegungsachsen ausgebildet sein.

Die Eingabevorrichtung weist zusätzlich eine Fingereingabeeinrichtung zur Eingabe von Programmbefehlen auf, die an dem Handsteuerhebel angeordnet ist. Als *Programmbefehl* wird dabei insbesondere eine Anweisung bezeichnet, welche eine Prozessaktion des Manipulators beschreibt, beispielsweise eine Anweisung zur Aktivierung, Deaktivierung oder sonstigen Steuerung eines Manipulatorwerkzeugs. Solche Programmbefehle können online während des Betriebs des Manipulators eingegeben werden, um beispielsweise bei einer manuellen online-Steuerung durch einen Bediener einen Greifer zu öffnen oder zu schließen, einen Bohrer oder Fräser zu drehen oder ein Schweiß- oder Klebewerkzeug zu aktivieren oder stillzusetzen.

Programmbefehle können auch in einem Arbeitsprogramm gespeichert werden. Solche *Programmierbefehle* können neben Prozessaktionen insbesondere auch den Programmablauf selbst steuern, beispielsweise das Abspeichern von Soll-Posen, Haltezeiten, Warten auf Benutzereingaben oder den Typ gewünschter Soll-Bahnen, mit denen gespeicherte Soll-Posen abgefahren werden, etwa "LIN" zur linearen Interpolation zwischen Soll-Posen, "CIRC" zur Generierung einer kreisförmigen Bahn und dergleichen. Insofern werden vorliegend insbesondere alle Anweisungen, die zur Erstellung oder Veränderung eines gespeicherten Programms für eine Manipulatorsteuerung dienen, und die bisher beispielsweise über Tastatur, mittels Maus oder über Tasten eines Eingabehandgerätes eingegeben werden, als Programmbefehle im Sinne der vorliegenden Erfindung bezeichnet.

Erfindungsgemäß ist die Fingereingabeeinrichtung mehrachsig ausgebildet, i.e. weist mehrere Bewegungsachsen auf. Ein Interpreter ordnet nun einer mehrachsigen Bewegung der Fingereingabeeinrichtung, die nachfolgend auch als Geste bezeichnet wird, jeweils einen entsprechenden Programmbefehl zu. Dadurch kann auf einfache und effektive Weise ein großes Lexikon von Programmbefehlen durch entsprechende Gesten, i. e. mehrachsige, zusammengesetzte Bewegungen, kodiert werden.

Beispielsweise kann eine erste Bewegungsachse der Fingereingabeeinrichtung im Wesentlichen orthogonal zu einer zweiten Bewegungsachse der Fingereingabeeinrichtung und vorzugsweise eine dritte Bewegungsachse im Wesentlichen orthogonal zu der ersten und zweiten Bewegungsachse sein. Die erste Bewegungsachse kann insbesondere im Wesentlichen in Richtung zum Handsteuerhebel hin ausgerichtet sein. Eine Geste kann dann ein Drücken der Fingereingabeeinrichtung, gefolgt von einer oder mehreren Bewegungen in eine hierzu im Wesentlichen orthogonale Ebene umfassen.

Dabei kann die Fingereingabeeinrichtung nach dem Drücken wieder freigegeben werden und, beispielsweise federbeaufschlagt, in ihrer ersten Bewegungsachse in ihre Ausgangsposition zurückkehren, bevor die weiteren Bewegungen ausgeführt werden. Gleichermaßen kann die Fingereingabeeinrichtung während der Ausführung der weiteren Bewegungen gedrückt bleiben. Dies ermöglicht es, eine Bewegung in einer zweiten Achse nur dann als Teil einer Geste zu interpretieren, der ein Programmbefehl zugeordnet ist, wenn die Fingereingabeeinrichtung gleichzeitig in der ersten Achse gedrückt gehalten wird oder zuvor in der ersten Achse gedrückt wurde, und so zufällige, unbeabsichtigte Bewegungen in der zweiten Achse auszufiltern.

Um die fälschliche Interpretation solcher zufälligen, unbeabsichtigten Bewegungen als Teil einer Geste, der ein Programmbefehl zugeordnet ist, auszuschließen, kann zusätzlich oder alternativ eine Umschalteinrichtung zum Aktivieren eines Programmiermodus vorgesehen sein, in dem eine mehrachsige Bewegung der Fingereingabeeinrichtung einem Programmbefehl zugeordnet wird, während der Interpreter Bewegungen der Fingereingabeeinrichtung ignoriert, falls die Eingabevorrichtung nicht in dem Programmiermodus ist. Vorzugsweise kann auch in einen Steuerbefehlsmodus umgeschaltet werden, in dem eine Bewegung der Fingereingabeeinrichtung beispielsweise einem Steuerbefehl für den Manipulator oder eine Anzeige, insbesondere einen Maus-Zeiger zugeordnet wird. Die Umschalteinrichtung kann sowohl hardwaretechnisch, beispielsweise durch einen Schalter, als auch softwaretechnisch, insbesondere durch entsprechende Programmbefehle, realisiert sein.

Die Fingereingabeeinrichtung weist bevorzugt einen fingerbetätigbaren Steuerhebel, i.e. einen Mini-Joystick auf, der vorzugsweise eine erste, beispielsweise im Wesentlichen in Richtung zum Handsteuerhebel hin ausgerichtete Bewegungsachse, und wenigstens eine zweite, vorzugsweise hierzu orthogonale Bewegungsachse (2D-Joystick), bevorzugt auch eine dritte, vorzugsweise zur ersten und zweiten Bewegungsachse orthogonale Bewegungsachse (3D-Joystick) aufweist.

Zusätzlich oder alternativ kann die Fingereingabeeinrichtung einen mehrachsigen Wippschalter aufweisen, insbesondere einen zweiachsigen Kreuz-Wippschalter oder einen dreiachsigen Druck-Kreuz-Wippschalter. In diesem Zusammenhang kann der Interpreter eine sequentielle Bewegung zunächst in einer und anschließend in einer anderen Bewegungsachse als eine mehrachsige Bewegung im Sinne der vorliegenden Erfindung interpretieren, wie dies beispielsweise bei einem zweiachsigen Kreuz-Wippschalter oder einem Joystick mit Kulissenführung der Fall ist. Gleichermaßen kann der Interpreter auch eine gleichzeitige Bewegung in zwei oder mehr Bewegungsachsen als eine mehrachsige Bewegung im Sinne der vorliegenden Erfindung interpretieren, wie dies beispielsweise bei einem dreiachsigen Druck-Kreuz-Wippschalter (Wippen bei gedrücktem Schalter) oder einem frei beweglichen Joystick der Fall ist.

Zusätzlich oder alternativ kann die Fingereingabeeinrichtung eine berührungserfassende Oberfläche aufweisen, wie sie insbesondere als Mouse-Pad bei Computern bekannt ist. Insofern kann eine erste, im Wesentlichen in Richtung zum Handsteuerhebel hin ausgerichtete Bewegungsachse auch durch eine minimale Verformung durch Druck auf die berührungserfassende Oberfläche realisiert sein. Vorteilhaft kann die berührungserfassende Oberfläche als Touch-Screen ausgebildet sein, um gleichzeitig Informationen anzuzeigen, beispielsweise zur Auswahl stehende (Teil)Gesten und die ihnen zugeordneten Programmbefehle.

Bevorzugt ist die Fingereingabeeinrichtung so an dem Handsteuerhebel angeordnet und ausgebildet, dass sie mit einem Finger, beispielsweise dem Daumen, der besonders beweglich ist, oder dem Zeige- oder Mittelfinger, der besonders lang ist, betätigt werden kann.

In einer bevorzugten Ausführung ist der Handsteuerhebel als beweglicher Joystick, beispielsweise als 2D-, 3D- oder 6D-Joystick ausgebildet, dessen Bewegungen Steuerbefehle zur Bewegung des Manipulators kodieren. In einer alternativen Ausführung kann der Handsteuerhebel jedoch auch als Glied des Manipulators, insbesondere als mit einem Endeffektor verbundener Griff ausgebildet sein, an dem seinerseits die Fingereingabeeinrichtung angeordnet ist. Kann der Manipulator, etwa durch Ziehen an dem Endeffektor, manuell bewegt werden, fungiert der Endeffektor selber als Handsteuerhebel im Sinne der vorliegenden Erfindung, der mehrachsig gegen die Manipulatorbasis beweglich ist und die Eingabe von Steuerbefehlen ermöglicht. Auch bei solchen handgeführten Manipulatoren ist die einfache und effektive Kodierung eines großes Lexikon von Programmbefehlen durch entsprechende Gesten, die der Bediener über die mehrachsige Fingereingabeeinrichtung eingibt, vorteilhaft.

Die Eingabevorrichtung kann fest mit einer Steuerung für den Manipulator, beispielsweise einem Steuerschrank oder einem PC, verbunden, insbesondere wenigstens teilweise in diese integriert sein. Gleichermaßen kann sie auch lösbar mit dieser verbunden sein und hierzu eine Schnittstelle, insbesondere eine serielle, parallele, analoge und/oder USB-Schnittstelle aufweisen. Diesbezüglich kann der Interpreter beispielsweise in der Basis oder dem Handsteuerhebel der Eingabevorrichtung angeordnet sein. Gleichermaßen kann er jedoch auch, wenigstens teilweise, in der Steuerung des Manipulators implementiert sein, an die dann nur Bewegungs- und/oder Positionssignale des Handsteuerhebels und/oder der Fingereingabeeinrichtung übermittelt werden müssen.

Weitere Vorteile und Merkmale ergeben sich aus den Unteransprüchen und den Ausführungsbeispielen. Hierzu zeigt, teilweise schematisiert:
- Fig. 1:: in perspektivischer Ansicht eine Eingabevorrichtung nach einer Ausführung der vorliegenden Erfindung; und
- Fig. 2:: ein Manipulatorsystem nach einer Ausführung der vorliegenden Erfindung

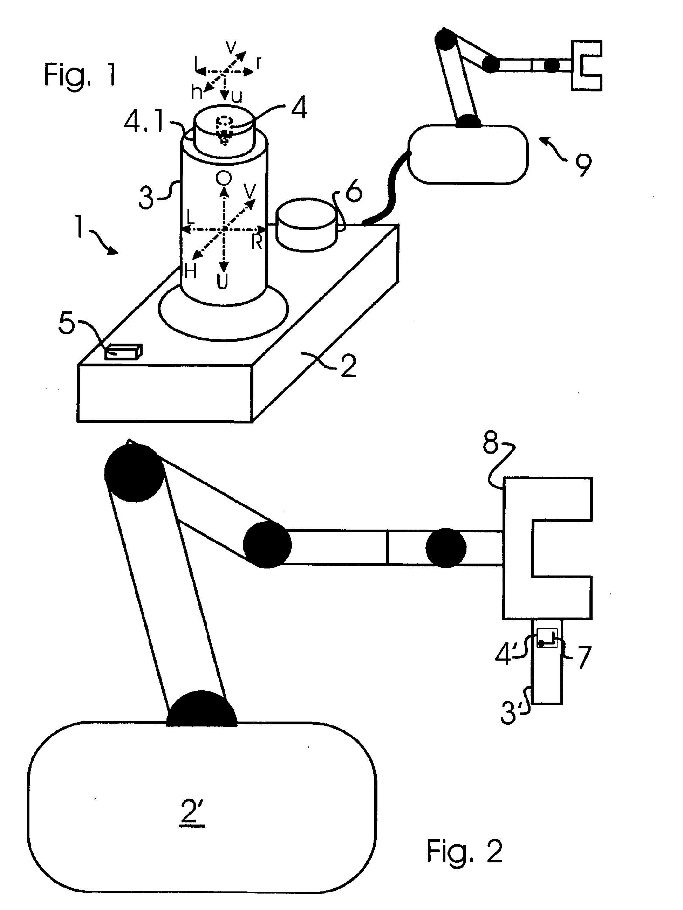

Fig. 1 zeigt eine Eingabevorrichtung 1 nach einer Ausführung der vorliegenden Erfindung in perspektivischer Ansicht. Diese umfast einen Handsteuerhebel in Form eines Joysticks 3, der in einer Basis, beispielsweise einem Handgerät 2 oder einer Konsole, in drei Achsen beweglich gelagert ist. Die in Fig. 1 strichpunktiert angedeuteten Bewegungsachsen "V-H", "L-R" und "O-U" erlauben eine gleichzeitige oder sequentielle Bewegung des Joysticks 3 gegen die Basis 2, die in der Basis erfasst und in Steuerbefehle umgesetzt wird, welche über eine nicht dargestellte USB-Schnittstelle an eine Steuerung eines Roboters 9 übertragen werden und eine entsprechende Bewegung des TCPs im kartesischen Raum bewirken. An der Basis 2 ist zusätzlich ein Wippschalter 5 als Umschalteinrichtung zum Umschalten zwischen einem Programmiermodus und einem Steuerbefehlsmodus sowie ein Not-AusSchalter 6 angeordnet. In einer nicht dargestellten Abwandlung kann der Joystick auch mehr als drei, insbesondere sechs Freiheitsgrade aufweisen.

An dem der Basis 2 abgewandten Kopf des Joysticks 3 ist eine Fingereingabeeinrichtung in Form eines mit dem Daumen betätigbaren Steuerhebels oder Mini-Joysticks 4 angeordnet, der gegenüber dem Joystick 3 in zwei orthogonalen Bewegungsachsen "v-h" und "I-r" hin- und herbeweglich ist und zusätzlich in einer weiteren Bewegungsachse "u" zum Joystick 3 hin gedrückt werden kann. Der Steuerhebel 4 ist mit einem Abdeckung 4.1 versehen.

Ist die Eingabevorrichtung 1 durch entsprechende Betätigung des Wippschalters 5 in den Programmiermodus geschaltet, ordnet ein als Software-Modul beispielsweise in der Basis 2 oder der Steuerung des Roboters 9 implementierter Interpreter einer mehrachsigen Bewegung des Steuerhebels 4 einen Programmbefehl zu. Beispielsweise wird eine gleichzeitige oder sequentielle Bewegung nach rechts und vorne, i.e. in die Richtungen "r" bzw. "v", als Anweisung "Greifer auf" interpretiert, eine sequentielle Bewegung zuerst nach rechts und dann nach links, i.e. in die Richtungen "r" und "I" als "Touch Up". Auf diese Weise können bei einer manuellen online-Steuerung des Roboters 9 verschiedenste Programmbefehle einfach und effizient mit einer Hand eingegeben werden, wobei gleichzeitig mit derselben Hand der Roboter 9 über den Joystick 3 bewegt werden kann. Die Eingabevorrichtung 1 erleichtert insbesondere das Teachen des Roboters 9, indem mit dem Joystick 3 gewünschte Posen angefahren und über den Steuerhebel 4 Programmierbefehle zur Erstellung des Arbeitsprogramms eingegeben werden.

Ist die Eingabevorrichtung 1 hingegen durch entsprechende Betätigung des Wippschalters 5 in den Steuerbefehlsmodus geschaltet, wird eine Bewegung des Steuerhebels 4 als Steuerbefehl zur Bewegung eines Maus-Zeiges (nicht dargestellt) interpretiert.

In einer bevorzugten Ausführung umfassen die mehrachsigen Bewegungen oder Gesten des Steuerhebels 4, denen der Interpreter einen Programmbefehl zuordnet, ein anfängliches oder dauerndes Herunterdrücken des Mini-Joysticks 4 zum Joystick 3 hin, so dass die fehlerhafte Eingabe von Programmbefehlen durch unbeabsichtigte Bewegungen des Mini-Joysticks 4 in "I-r" oder "v-h"-Richtung vermieden werden. Entsprechen wird nur eine sequentielle Bewegung zuerst nach unten, dann nach rechts und anschließend nach links, i.e. in die Richtungen "u", "r" und "I" als "Touch Up" interpretiert, die Rechts-Linksbewegung ohne anfängliches Herunterdrücken jedoch ignoriert.

Fig. 2 zeigt ein Manipulatorsystem nach einer weiteren Ausführung der vorliegenden Erfindung, das einen sechsachsigen Knickarmroboter mit einem Grundgestell 2' als Basis und einem gegen diese in sechs Achsen bewegliches Werkzeug 8 aufweist. An dem Werkzeug ist ein Handgriff 3' als Handsteuerhebel befestigt. Durch eine Kraftregelung des Roboters kann das Werkzeug 8 mit dem Handgriff 3' manuell in gewünschte Posen bewegt werden.

An dem Handgriff 3' ist eine Fingereingabeeinrichtung in Form einer berührungserfassenden Oberfläche bzw. eines Mouse-Pads 4' angeordnet. Auf diesem kann der Bediener beim Führen des Roboters am Handgriff 3' durch Aufdrücken in Richtung des Handgriffs 3' (in Fg. 2 durch einen Kreis symbolisiert) und anschließendes Ziehen des drückenden Fingers oder Stiftes in verschiedene Richtungen in der Mouse-Pad-Ebene in der vorstehend mit Bezug auf Fig. 1 erläuterten Weise Programmbefehle eingeben. So kann beispielsweise ein Interpreter in der Steuerung des Roboters der in Fig. 2 angedeuteten sequentiellen Bewegung nach rechts und vorne die Anweisung "Greifer auf" zuordnen.

### Bezugszeichenliste

- 1: Eingabevorrichtung
- 2: Handgerät (Basis)
- 2': Grundgestell (Basis)
- 3: Joystick (Handsteuerhebel)
- 3': Handgriff (Handsteuerhebel)
- 4: Steuerhebel (Fingereingabeeinrichtung)
- 4.1: Abdeckung
- 4': Mouse-Pad (Fingereingabeeinrichtung)
- 5: Wippschalter (Umschalteinrichtung)
- 6: Not-Aus
- 7: Geste "→"
- 8: Werkzeug
- 9: Roboter

## Patentansprüche

1. Eingabevorrichtung (1) zur kombinierten Eingabe von Steuer- und Programmbefehlen für einen Manipulator, insbesondere einen Roboter (9), mit einem mehrachsig gegen eine Basis (2) beweglichen Handsteuerhebel (3; 3') zur Eingabe von Steuerbefehlen; und
einer Fingereingabeeinrichtung (4; 4') zur Eingabe von Programmbefehlen, die an dem Handsteuerhebel angeordnet ist;
**dadurch gekennzeichnet, dass**
die Fingereingabeeinrichtung mehrachsig ausgebildet ist; und dass die Vorrichtung einen Interpreter zum Zuordnen einer mehrachsigen Bewegung (7) der Fingereingabeeinrichtung zu einem Programmbefehl aufweist.

2. Eingabevorrichtung nach Anspruch 1, **dadurch gekennzeichnet, dass** die Fingereingabeeinrichtung einen fingerbetätigbaren Steuerhebel (4), einen mehrachsigen Wippschalter und/oder eine berührungserfassende Oberfläche (4') aufweist.

3. Eingabevorrichtung nach einem der vorhergehenden, Ansprüche, **dadurch gekennzeichnet, dass** die Fingereingabeeinrichtung, mit einem Finger betätigbar, an dem Handsteuerhebel angeordnet ist.

4. Eingabevorrichtung nach einem der vorhergehenden Ansprüche, **dadurch gekennzeichnet, dass** eine erste Bewegungsachse ("u") der Fingereingabeeinrichtung im Wesentlichen orthogonal zu einer zweiten Bewegungsachse ("r-I") der Fingereingabeeinrichtung ist.

5. Eingabevorrichtung nach Anspruch 4, **dadurch gekennzeichnet, dass** eine dritte Bewegungsachse ("v-h") der Fingereingabeeinrichtung im Wesentlichen orthogonal zu der ersten und zweiten Bewegungsachse der Fingereingabeeinrichtung ist.

6. Eingabevorrichtung nach einem der vorhergehenden Ansprüche, **dadurch gekennzeichnet, dass** der Handsteuerhebel als Glied des Manipulators, insbesondere als mit einem Endeffektor verbundener Griff (3') ausgebildet ist.

7. Eingabevorrichtung nach einem der vorhergehenden Ansprüche, **gekennzeichnet durch** eine Umschalteinrichtung (5) zum Umschalten in einen Programmiermodus zur Eingabe von Programmbefehlen, so dass eine mehrachsige Bewegung der Fingereingabeeinrichtung einem Programmbefehl zugeordnet wird.

8. Eingabevorrichtung nach Anspruch 7 **dadurch gekennzeichnet, dass** die Eingabevorrichtung durch die Umschalteinrichtung in einen Steuerbefehlsmodus umschaltbar ist, in dem eine Bewegung der Fingereingabeeinrichtung einem Steuerbefehl für den Manipulator oder eine Anzeige zugeordnet wird.

9. Eingabevorrichtung nach einem der vorhergehenden Ansprüche, **gekennzeichnet durch** eine Schnittstelle, insbesondere eine serielle, parallele, analoge und/oder USB-Schnittstelle zur Verbindung mit einer Steuerung für den Manipulator.

10. Manipulatorsystem mit
wenigstens einem Manipulator, insbesondere Roboter (9);
einer Steuerung für den Manipulator; und
einer Eingabevorrichtung (1) nach einem der vorhergehenden Ansprüche zur kombinierten Eingabe von Steuer- und Programmbefehlen in die Steuerung.

11. Manipulatorsystem nach Anspruch 10, **dadurch gekennzeichnet, dass** der Interpreter wenigstens teilweise in der Steuerung für den Manipulator implementiert ist.

12. Verfahren zur kombinierten Eingabe von Steuer- und Programmbefehlen für einen Manipulator, insbesondere einen Roboter (9), mittels einer Eingabevorrichtung (1) nach einem der vorhergehenden Ansprüche 1 bis 9, mit den Schritten:
- Erfassen einer Bewegung des Handsteuerhebels (3; 3') gegen die Basis (2; 2') zur Eingabe von Steuerbefehlen;
- Erfassen einer mehrachsigen Bewegung ("r→v"; "r→ l"; "u→r→v") der Fingereingabeeinrichtung (4; 4') zur Eingabe von Programmbefehlen; und
- Zuordnen der mehrachsigen Bewegung der Fingereingabeeinrichtung zu einem Programmbefehl.

13. Verfahren nach Anspruch 12, **dadurch gekennzeichnet, dass** eine Bewegung der Fingereingabeeinrichtung in einer zweiten Bewegungsachse ("r-l", "v-h") einem Programmbefehl nur zugeordnet wird, wenn zuvor eine Bewegung der Fingereingabeeinrichtung in einer ersten Bewegungsachse ("u") erfasst worden ist.

## Claims

1. An input device (1) for combined input of control- and program commands for a manipulator, in particular a robot (9), with a hand control lever (3; 3') that is movable in a plurality of axes relative to a basis (2) for input of control commands; and
a finger input means (4; 4') for input of program commands, which is arranged on the hand control lever;
**characterized in that**
the finger input means is formed in a multi-axis way; and that
the device comprises an interpreter for assigning a multi-axis motion (7) of the finger input means to a program command.

2. An input device according to claim 1, **characterized in that** the finger input means comprises a control lever (4), which can be operated by a finger, a multi-axis rocker switch and/or a touch sensitive surface (4').

3. An input device according to one of the preceding claims, **characterized in that** the finger input means is arranged at the hand control lever and can be operated by a finger.

4. An input device according to one of the preceding claims, **characterized in that** a first motion axis ("u") of the finger input means is essentially orthogonal to a second motion axis ("r-l") of the finger input means.

5. An input device according to claim 4, **characterized in that** a third motion axis ("v-h") of the finger input means is essentially orthogonal to the first and to the second motion axis of the finger input means.

6. An input device according to one of the preceding claims, **characterized in that** the hand control lever is formed as element of the manipulator, in particular as a handle (3') that is connected to an end effector.

7. An input device according to one of the preceding claims, **characterized by** a switching means (5) for switching in a programming mode for input of program commands, such that a multi-axis motion of the finger input means is assigned to a program command.

8. An input device according to claim 7, **characterized in that** the input device is switchable into a control command mode by the switching device, in which a motion of the finger input means is assigned to a control command for a manipulator or to a display.

9. An input device according to one of the preceding claims, **characterized by** an interface, in particular a serial, parallel, analog and/or USB-interface for connection with a control for the manipulator.

10. A manipulator system with
at least one manipulator, in particular a robot (9);
a control for the manipulator; and
an input device (1) according to one of the preceding claims for combined input of control- and program commands in the control.

11. A manipulator system according to claim 10, **characterized in that** the interpreter is implemented at least partly in the control for the manipulator.

12. A method for combined input of control- and program commands for a manipulator, in particular a robot (9), with an input device (1) according to one of the preceding claims 1-9, comprising the steps:
- Detecting a motion of the hand control lever (3; 3') relative to the basis (2; 2') for input of control commands;
- Detecting a multi-axis motion ("r→v"; "r→l"; "u→r→v") of the finger input means (4; 4') for input of program commands; and
- Assigning the multi-axis motion of the finger input means to a program command.

13. A method according to claim 12, **characterized in that** a motion of the finger input means in a second motion axis ("r-l", v-h") is assigned to a program command only if a motion of the finger input means in a first motion axis ("u") is detected before.

## Revendications

1. Dispositif d'entrée (1) pour l'entrée combinée d'ordres de commande et de programme pour un manipulateur, en particulier pour un robot (9), possédant un levier de commande manuel (3, 3') mobile en mouvement multiaxe par rapport à une base (2) pour l'introduction d'ordres de commande ; et
un dispositif d'entrée digital (4, 4') pour l'introduction d'ordres de programme, qui est agencé sur le levier de commande manuel ;
**caractérisé en ce que**
le dispositif d'entrée digital est multiaxe ; et **en ce que**
le dispositif présente un interprète servant à associer un mouvement multiaxe (7) du dispositif d'entrée digital à un ordre de programme.

2. Dispositif d'entrée selon la revendication 1, **caractérisé en ce que** le
dispositif d'entrée digital présente un levier de commande (4) pouvant être actionné au doigt, un commutateur à bascule multiaxe et/ou une surface de détection du contact (4').

3. Dispositif d'entrée selon une des revendications précédentes, **caractérisé en ce que** le dispositif d'entrée digital pouvant être actionné avec un doigt est agencé sur le levier de commande manuel.

4. Dispositif d'entrée selon une des revendications précédentes,
**caractérisé en ce qu'**un premier axe de mouvement ("u") du dispositif d'entrée digital est sensiblement orthogonal à un deuxième axe de mouvement ("r-l") du dispositif d'entrée digital.

5. Dispositif d'entrée selon la revendication 4, **caractérisé en ce qu'**un
troisième axe de mouvement ("v-h") du dispositif d'entrée digital est sensiblement orthogonal aux premier et deuxième axes de mouvement du dispositif d'entrée digital.

6. Dispositif d'entrée selon une des revendications précédentes, **caractérisé**
**en ce que** le levier de commande manuel est constitué par un organe du manipulateur, en particulier par une poignée (3') reliée à un effecteur final.

7. Dispositif d'entrée selon une des revendications précédentes, **caractérisé**
**par** un dispositif de commutation (5) servant à basculer sur un mode de programmation utilisé pour entrer des ordres de programme, de sorte qu'un mouvement multiaxe du dispositif d'entrée digital est associé à un ordre de programme.

8. Dispositif d'entrée selon la revendication 7, **caractérisé en ce que** le
dispositif d'entrée peut être basculé par le dispositif de commutation sur un mode d'ordre de commande dans lequel un mouvement du dispositif d'entrée digital est associé à un ordre de commande pour le manipulateur ou pour un affichage.

9. Dispositif d'entrée selon une des revendications précédentes, **caractérisé**
**par** une interface, en particulier une interface série, parallèle, analogique et/ou USB servant à le connecter à une commande pour le manipulateur.

10. Système manipulateur comprenant :
au moins un manipulateur, en particulier un robot (9) ;
une commande pour le manipulateur ; et
un dispositif d'entrée (1) selon une des revendications précédentes pour l'entrée combinée d'ordres de commande et de programme dans la commande.

11. Système manipulateur selon la revendication 10, **caractérisée en ce que** l'interprète est au moins partiellement inclus dans la commande du manipulateur.

12. Procédé pour l'entrée combinée d'ordres de commande et de programme pour un manipulateur, en particulier pour un robot (9), au moyen d'un dispositif d'entrée (1) selon une des revendications précédentes 1 à 9, comportant les étapes suivantes :
- détecter un mouvement du levier de commande manuel (3 ; 3') par rapport à la base (2 ; 2') pour l'entrée d'ordres de commande ;
- détecter un mouvement multiaxe ("r→V" ; "r→I" ; "u→r→V") du dispositif d'entrée digital (4 ; 4') pour l'entrée d'ordres de programme ; et
- associer le mouvement multiaxe du dispositif d'entrée digital à un ordre de programme.

13. Procédé selon la revendication 12, **caractérisé en ce qu'**un mouvement du dispositif d'entrée digital dans un deuxième axe de mouvement ("r-l", "v-h") n'est associé à un ordre de programme que lorsqu'un mouvement du dispositif d'entrée digital dans un premier axe de mouvement ("u") a été détecté.
